# FASCICULE DE BREVET EUROPEEN

(11) **EP 3 656 678 B1**
(45) Date de publication et mention de la délivrance du brevet: **03.04.2024**
(21) Numéro de dépôt: 19209561.0
(22) Date de dépôt: 15.11.2019
(51) Int. Cl.: B64D 37/32, B01D 53/00, B64D 13/06, B64D 45/00, B01D 53/22

(54) **GÉNÉRATEUR DE GAZ D'INERTAGE D'UN SYSTÈME D'INERTAGE D'UN RÉSERVOIR DE CARBURANT D'UN AÉRONEF, ET PROCÉDÉ D'INERTAGE**
INERT GAS GENERATOR EINES INERTISIERUNGSSYSTEMS EINES LUFTFAHRZEUG-KRAFTSTOFFTANKS, UND INERTISIERUNGSVERFAHREN
INERTING GAS GENERATOR OF A SYSTEM FOR INERTING A FUEL TANK OF AN AIRCRAFT, AND INERTING METHOD

(30) Priorité: 23.11.2018 FR 1871792
(43) Date de publication de la demande: 27.05.2020
(73) Titulaire: Zodiac Aerotechnics, 42230 Roche La Moliere (FR)
(72) Inventeur: CLARIS, Christophe, 42170 SAINT-JUST-SAINT-RAMBERT (FR)
(74) Mandataire: Delprat, Olivier

(56) Documents cités:
- US-A1- 2003 233 936
- US-A1- 2007 054 610
- US-A1- 2016 214 732
- US-A1- 2017 239 615
- US-B1- 8 801 831

## Description

### DOMAINE TECHNIQUE

La présente invention se rapporte au domaine technique des générateurs de gaz d'inertage, notamment utilisés dans des systèmes d'inertage d'au moins un réservoir de carburant d'un aéronef, tel qu'un avion, un hélicoptère ou analogue.

### ART ANTERIEUR

Dans le domaine de l'aéronautique, il est bien connu d'utiliser des systèmes d'inertage pour générer un gaz d'inertage, tel que de l'azote, ou tout autre gaz neutre tel que le dioxyde de carbone par exemple, et pour l'injecter dans les réservoirs de carburant d'un aéronef pour des raisons de sécurité afin de réduire le risque d'explosion desdits réservoirs.

D'une manière générale un générateur de gaz d'inertage comprend un circuit avec une entrée d'air et des moyens de distribution du flux d'air vers une pluralité de modules de séparation d'air agencés en parallèle sur le circuit d'air pour appauvrir l'air en oxygène et générer, en sortie, un gaz d'inertage enrichi en azote.

Les systèmes d'inertage actuels permettent d'injecter du gaz d'inertage dans les réservoirs de carburant présentant un niveau d'inflammabilité incompatible avec les règles de certification du domaine de l'aviation, bien connues de l'homme du métier.

En pratique, les systèmes d'inertage sont dimensionnés pour injecter une quantité de gaz d'inertage calculée en fonction d'un point de fonctionnement spécifique de l'aéronef, notamment en phase de descente à 4000 pieds.

Ce point de fonctionnement spécifique permet de calculer un besoin en débit et en pureté de gaz d'inertage, et d'en déduire le nombre et le type de module de séparation d'air nécessaire. En dehors de ce point de dimensionnement de l'aéronef, les réservoirs nécessitent moins de gaz d'inertage.

Il résulte de ce qui précède que le générateur d'inertage mis en oeuvre dans l'état actuel de la technique est surdimensionné par rapport aux besoins réels en gaz d'inertage, pour certaines phases de vol. Il en est de même des éléments filtrants, et autres composants du système d'inertage, ce qui augmente le poids, la consommation et le coût du système d'inertage, pour ces phases de vol.

US 2016/0214732, US 2007/0054610, US 8801831, US 2003/0233936, US 2017/0239615 décrivent des générateurs de gaz d'inertage selon l'art antérieur.

### EXPOSE DE L'INVENTION

L'un des buts de l'invention est donc de remédier aux inconvénients de l'art antérieur en proposant un générateur de gaz d'inertage, ainsi qu'un procédé d'inertage permettant d'optimiser le dimensionnement et l'utilisation d'un système d'inertage, pour en réduire sa consommation et son coût d'utilisation.

Un autre objectif de l'invention est également de fournir un tel générateur de gaz d'inertage comprenant des composants dont la durée de vie est augmentée.

À cet effet, il a été mis au point un générateur de gaz d'inertage à partir d'un flux d'air, notamment intégré dans un système d'inertage d'au moins un réservoir de carburant d'un aéronef, le générateur comprenant un circuit avec une entrée d'air et des moyens de distribution du flux d'air vers une pluralité de modules de séparation d'air agencés en parallèle sur le circuit d'air pour appauvrir l'air en oxygène et générer, en sortie, un gaz d'inertage enrichi en azote.

Selon l'invention, le générateur de gaz d'inertage comprend une unité de contrôle des moyens de distribution programmée pour alimenter sélectivement en air un seul, une partie, ou l'ensemble des modules de séparation d'air en fonction de la phase de vol de l'aéronef.

De cette manière, l'utilisation des modules de séparation d'air est liée aux besoins réels en gaz d'inertage, lequel besoin est notamment défini en fonction de la phase de vol de l'aéronef. Ainsi, le générateur de gaz d'inertage consomme la quantité d'air nécessaire aux besoins en gaz inerte. Toute surconsommation est évitée. L'invention permet alors de diminuer les coûts de fonctionnement du système et du générateur de gaz d'inertage, ainsi que de diminuer l'usure et donc d'augmenter la durée de vie des composants du générateur de gaz d'inertage.

Par exemple, l'unité de contrôle est programmée pour alimenter en air un seul module de séparation d'air lorsque l'aéronef est en phase de croisière, et un seul ou une partie des modules lorsque l'aéronef est en phase de montée.

De la même manière, l'unité de contrôle est, de préférence, programmée pour alimenter en air une pluralité ou l'ensemble des modules de séparation d'air lorsque l'aéronef est en phase de descente.

A partir de ce concept, plusieurs cas de figures ont été imaginés, seuls ou en combinaison.

Par exemple, selon un mode de réalisation particulier, lorsqu'un seul ou une partie des modules de séparation d'air sont alimentés en air, l'unité de contrôle est programmée pour alimenter en air, parmi la pluralité de modules de séparation d'air, le ou les modules de séparation d'air ayant le nombre d'heures de fonctionnement cumulées le moins élevé.

Selon un autre mode de réalisation, lorsqu'un seul ou une partie des modules séparation d'air sont alimentés en air, l'unité de contrôle est programmée pour alimenter en air, parmi la pluralité de modules de séparation d'air, le ou les modules de séparation d'air ayant les meilleures performances, c'est-à-dire le taux d'oxygène le plus bas dans le gaz d'inertage généré.

La mesure des performances des modules de séparation d'air peut être effectuée l'aéronef en phase de descente, au sol ou en croisière.

Avantageusement, le générateur de gaz d'inertage comprend au moins un analyseur d'oxygène, et des moyens pour diriger le gaz d'inertage en sortie de chaque module de séparation d'air vers l'analyseur d'oxygène pour mesurer les performances de chaque module de séparation d'air, indépendamment les uns des autres.

Cette caractéristique permet de vérifier la pureté du gaz d'inertage en sortie de chaque module de séparation d'air, et de permettre de choisir lequel des modules de séparation d'air doit être utilisé si on se base sur le critère de performance. Cette caractéristique permet également de vérifier, par exemple lorsque l'aéronef est en croisière, au sol ou bien en phase de descente, les performances des modules de séparation d'air, un à un, pour ensuite prévoir le changement du module de séparation d'air qui, par exemple seul, présente des performances inappropriées. En effet, dans l'état de la technique il est actuellement impossible de tester de manière indépendante les performances de chaque module de séparation d'air, de sorte que lorsque l'on détecte des pertes de performances, il est souvent nécessaire de changer un ensemble de modules de séparation d'air en entier, qui comporte en principe entre deux et cinq modules, voire plus.

Dans un autre mode de réalisation, pris seul ou en combinaison avec ceux décrits, lorsqu'un seul ou une partie des modules de séparation d'air sont alimentés en air, l'unité de contrôle est programmée pour alterner à un intervalle de temps déterminé, parmi la pluralité de modules de séparation d'air, l'alimentation du ou des modules de séparation d'air.

Dans cette configuration, l'invention permet de basculer entre les différents modules de séparation d'air, après une période d'utilisation déterminée, pour uniformiser l'usure des différents modules de séparation d'air, en basculant par exemple aux modules suivants, ou bien aux modules qui présentent les meilleures performances, ou bien aux modules qui présentent le nombre d'heures de fonctionnement cumulées le moins élevé.

Ainsi, cela permet d'uniformiser l'utilisation et l'usure des différents modules de séparation d'air.

Selon une forme de réalisation particulière, les moyens de distribution du flux d'air se présentent sous la forme d'une vanne appropriée, par exemple multicanaux, laquelle est alors apte à diriger le flux d'air vers un ou plusieurs des modules de séparation d'air.

Selon une autre forme de réalisation, les moyens de distribution du flux d'air se présentent sous la forme d'une pluralité de vannes, notamment autant de vannes que de modules de séparation d'air, chacune étant disposée en amont d'un module de séparation d'air.

Ainsi, en fonction de l'utilisation des différentes vannes, seule, en partie, ou toutes ensemble, il est possible de diriger le flux d'air vers un seul, une partie, où l'ensemble des modules de séparation d'air.

D'une manière avantageuse, et afin d'éviter toute recirculation d'air lorsque certains des modules de séparation d'air ne sont pas utilisés, le générateur de gaz d'inertage comprend des clapets anti retour positionnés en sortie de chacun des modules de séparation d'air.

L'invention concerne également un procédé d'inertage d'un réservoir de carburant d'un aéronef au moyen d'un générateur de gaz d'inertage tel que précité. Le procédé est remarquable en ce qu'il consiste à alimenter sélectivement en air un seul, plusieurs ou l'ensemble des modules de séparation d'air en fonction de la phase de vol de l'aéronef.

### DESCRIPTION SOMMAIRE DES FIGURES

D'autres avantages et caractéristiques ressortiront mieux de la description qui va suivre, donnée à titre d'exemple non limitatif, du générateur de gaz d'inertage selon l'invention, à partir des dessins annexés dans lesquels :
[Fig 1] : la figure 1 est une représentation schématique d'un système d'inertage d'un réservoir de carburant d'un aéronef ;
[Fig 2] : la figure 2 est une représentation schématique d'un générateur de gaz d'inertage, les moyens de distribution étant pilotés pour alimenter en air un seul des modules de séparation d'air ;
[Fig 3] : la figure 3 est une représentation schématique, similaire à celle de la figure 2, les moyens de distribution étant pilotés pour alimenter en air une partie des modules de séparation d'air ;
[Fig 4] : la figure 4 est une représentation schématique, similaire à celle de la figure 2, les moyens de distribution étant pilotés pour alimenter en air l'ensemble des modules de séparation d'air ;
[Fig 5] : la figure 5 est une représentation schématique d'un autre mode de réalisation du générateur de gaz d'inertage selon l'invention, dans lequel les moyens de distribution du flux d'air se présentant sous la forme d'une pluralité de vannes, chacune positionnée en amont d'un module de séparation d'air ;
[Fig 6] : la figure 6 est une représentation schématique similaire à celle de la figure 5, sans vanne en amont de l'analyser d'oxygène.

### DESCRIPTION DETAILLEE DE L'INVENTION

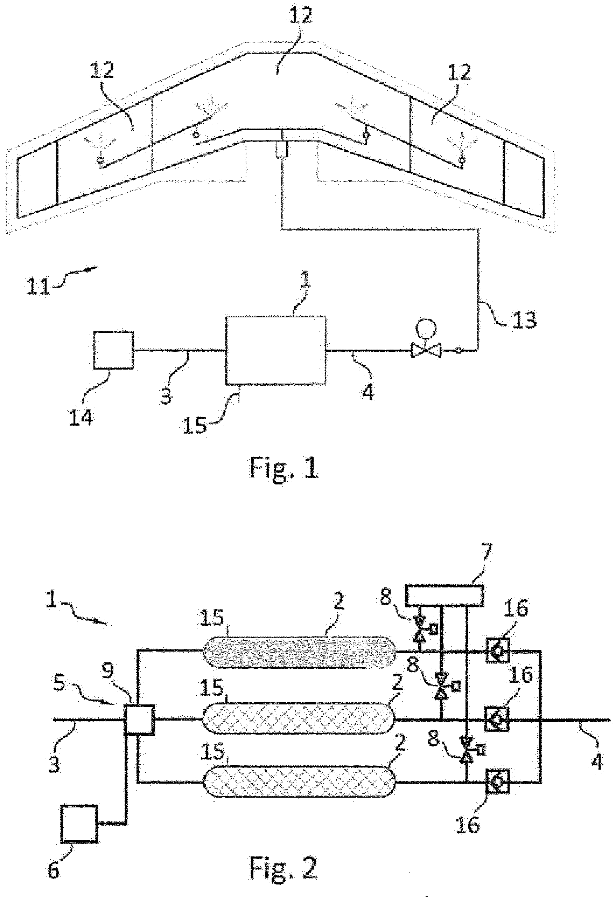

En référence à la figure 1, l'invention concerne un générateur (1) de gaz d'inertage comprenant un circuit d'air à appauvrir en oxygène pour générer du gaz d'inertage enrichi en azote.

Le générateur (1) est notamment destiné à être mis en oeuvre dans un système d'inertage (11) d'au moins un réservoir (12) de carburant d'un aéronef. A cet effet, le générateur (1) de gaz d'inertage comprend une entrée d'air (3) alimentée avec de l'air de purge détourné d'au moins un moteur et/ou de l'air d'une cabine de passagers et/ou de l'air extérieur à l'aéronef par l'intermédiaire d'un système de préparation d'air (14) éventuellement assujetti à un compresseur, et une sortie de gaz d'inertage (4) connectée avec des moyens de distribution (13) du gaz d'inertage dans le ou les réservoirs (12) de carburant. Le générateur (1) comprend également une sortie de gaz enrichi en oxygène (15)

Le système d'inertage (11) permet de générer et d'introduire un gaz d'inertage dans le ou lesdits réservoirs (12) de carburant de l'aéronef pour des raisons de sécurité afin de réduire le risque d'explosion desdits réservoirs. Le gaz d'inertage injecté vise à rendre inerte le ou les réservoirs (12) de carburant, c'est-à-dire qu'il permet de réduire le taux d'oxygène présent dans le ou lesdits réservoirs, et notamment de maintenir ce taux sous un certain seuil, de préférence inférieur à 12%.

En référence aux figures 2 à 5, le générateur (1) de gaz d'inertage comprend une pluralité de modules (2) de séparation d'air, c'est-à-dire au moins deux, et de préférence au moins trois, agencés en parallèle sur le circuit d'air.

Les modules (2) de séparation d'air comprennent par exemple des membranes en polymère au travers desquelles l'air sous pression est injecté de manière à obtenir, d'une part, un gaz d'inertage à forte teneur en azote et, d'autre part, un gaz à forte teneur en oxygène.

Par ailleurs, le générateur (1) de gaz d'inertage comprend des moyens (5) de distribution du flux d'air, positionnés sur le circuit d'air, en amont des modules (2) de séparation d'air. Selon l'invention, le générateur (1) de gaz d'inertage comprend une unité de contrôle (6), telle que par exemple une carte électronique intégrant un logiciel, permettant de contrôler et piloter les moyens (5) de distribution.

Plus précisément, l'unité de contrôle (6) est programmée pour piloter les moyens (5) de distribution afin d'alimenter sélectivement en air, un seul, une partie, où l'ensemble des modules (2) de séparation d'air en fonction de la phase de vol de l'aéronef. Les données relatives à la phase de vol de l'aéronef sont récupérées par l'unité de contrôle de toute manière appropriée, et sont par exemple transmises directement par l'ordinateur de bord de l'aéronef.

L'invention permet ainsi d'ajuster le nombre de modules (2) de séparation d'air à utiliser en fonction du besoin réel de gaz d'inertage à injecter dans les réservoirs (12), qui diffère en fonction de la phase de vol de l'aéronef.

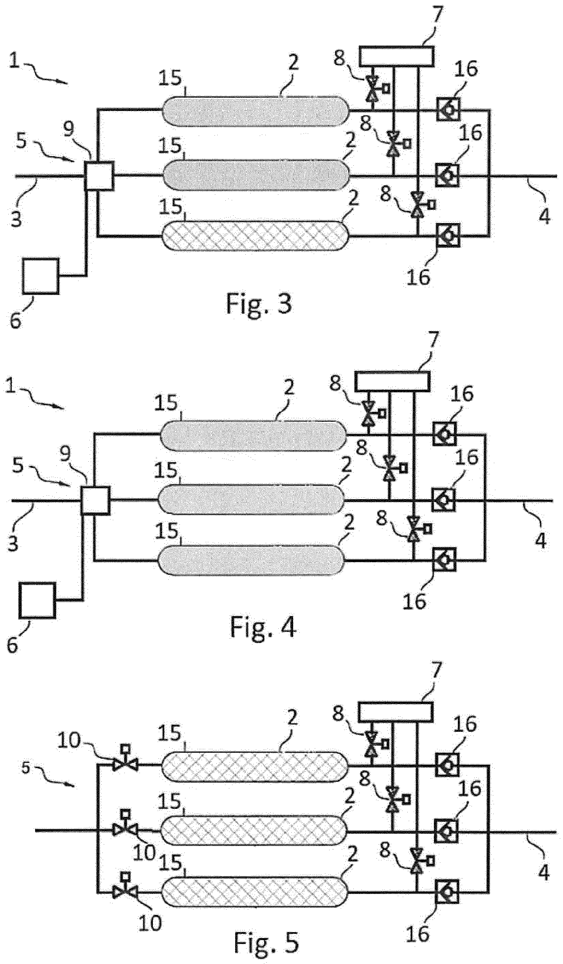

Par exemple, l'unité de contrôle (6) peut être programmée pour alimenter en air une partie des modules (2) de séparation d'air, et de préférence un seul module (2) de séparation d'air lorsque l'aéronef est en phase de croisière ou de montée, voir figures 2 et 3, alors qu'elle peut être programmée pour alimenter en air une pluralité et de préférence l'ensemble des modules (2) de séparation d'air lorsque l'aéronef est en phase de descente, voir figure 4.

De ce qui précède, l'invention permet également de réduire le nombre d'heures totales d'utilisation des modules (2) de séparation d'air puisque, dans certains cas, certains modules (2) ne seront pas utilisés.

Il résulte que l'invention permet d'optimiser le dimensionnement du système d'inertage (11) et donc d'amoindrir de façon significative le débit d'air consommé par le générateur (1) de gaz d'inertage, et voire d'optimiser le dimensionnement des échangeurs et des éléments de filtration. Bien entendu, ceci permet par conséquent de diminuer le coût de fonctionnement du système d'inertage (11), mais également les risques de surpression ou sur-température des réservoirs (12).

En partant de ce concept, l'unité de contrôle (6) est avantageusement programmée, lorsqu'un seul ou une partie des modules (2) de séparation d'air sont alimentés en air, pour alimenter en air, parmi la pluralité de modules (2) de séparation d'air, le ou les modules (2) de séparation d'air ayant le nombre d'heures de fonctionnement cumulées le plus faible. Ainsi, les modules (2) de séparation d'air sont choisis par l'unité de contrôle (6) et utilisés en fonction de leur nombre d'heures de fonctionnement cumulées, ce qui permet d'uniformiser les usures des différents modules (2) de séparation d'air, optimisant ainsi leur durée de vie. Cela permet, par exemple, pour un aéronef en phase de croisière ou de montée, de basculer alternativement entre les différents modules (2) de séparation d'air. Cela permet de rendre le système d'inertage actif plus longtemps et plus économique.

Selon une autre forme de réalisation, lorsqu'un seul ou une partie des modules (2) séparation d'air sont alimentés en air, l'unité de contrôle (6) est, de préférence, programmée pour alimenter en air, parmi la pluralité de modules (2) de séparation d'air, le ou les modules (2) de séparation d'air ayant les meilleures performances, c'est-à-dire le taux d'oxygène le plus bas dans le gaz d'inertage généré.

Afin d'apprécier les performances de chaque module (2) de séparation d'air, le générateur (1) de d'inertage comprend au moins un analyseur d'oxygène (7), et des moyens, notamment conduites et éventuellement des vannes (8), pour diriger le gaz d'inertage en sortie de chaque module (2) de séparation d'air vers l'analyseur d'oxygène (7). Ceci permet de mesurer les performances de chaque module (2) de séparation d'air, indépendamment les uns des autres.

Cette mesure de performance peut être effectuée en vol, par exemple en phase de descente, ou bien au sol. Ceci permet de connaître les performances de chacun des modules (2) de séparation d'air et d'alterner leur utilisation en fonction de ces performances.

Selon une forme de réalisation particulière, notamment illustrée aux figures 2 à 4 les moyens (5) de distribution du flux d'air se présentent par exemple sous la forme d'une vanne multicanaux (9), positionnée en amont de tous les modules (2) de séparation d'air, adaptée pour diriger le flux d'air sélectivement vers l'un, vers une partie, ou vers l'ensemble des modules (2) de séparation d'air.

Dans une autre forme de réalisation, notamment illustrée figure 5, chaque module (2) de séparation d'air est associé, en amont, à une vanne (10), ce qui permet par l'actionnement de chacune des vannes (10), d'alimenter sélectivement soit l'un, soit une partie, soit l'ensemble des modules (2) de séparation d'air. Par ailleurs, le générateur de gaz d'inertage comprend des clapets (16) anti retour positionnés en sortie de chacun des modules de séparation d'air.

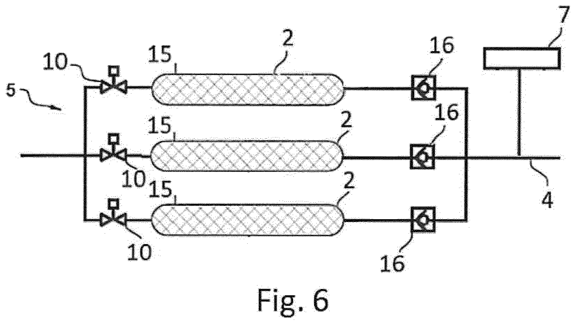

Que ce soit avec la vanne multicanaux (9) ou avec la pluralité de vannes (10), la présence des vannes (8) en aval des module (2) de séparation d'air n'est pas essentielle, tel cela est représenté à la figure 6.

Selon l'invention, l'unité de contrôle (6) pilote donc les moyens (5) de distribution du flux d'air pour utiliser et alimenter sélectivement les modules (2) de séparation d'air, en fonction de la phase de vol de l'aéronef. Ensuite, lorsqu'un ou une partie des modules (2) de séparation d'air doivent être utilisés, l'unité de contrôle (6) choisit les modules (2) qui doivent être utilisés en fonction de plusieurs critères, comme par exemple en fonction des performances, de l'usure, du nombre d'heures de fonctionnement cumulées, ou simplement en fonction d'une durée d'utilisation afin de basculer d'un module (2) de séparation à un autre après un certain temps de fonctionnement, par exemple une heure.

Bien entendu, des combinaisons de ces critères peuvent être envisagées. Comme par exemple, l'unité de contrôle (6) peut choisir le module (2) ayant le nombre d'heures de fonctionnement cumulées le moins élevé et, si deux modules (2) ont le même nombre d'heures de fonctionnement cumulées, l'unité de contrôle (6) peut choisir parmi ces deux modules (2), celui qui a les meilleures performances. Le module (2) choisi peut ensuite être remplacé, au bout d'un certain laps de temps de fonctionnement, par un autre module (2) selon ces mêmes critères.

Le concept à l'origine de l'invention réside dans le choix du nombre de module (2) de séparation d'air en fonction de la phase de vol, ce qui permet d'ajuster le dimensionnement du système d'inertage (11) en fonction de besoin réel en gaz d'inertage par les réservoirs (12) de carburant. Cependant, il pourrait être envisagé d'appliquer les critères de choix des différents modules (2), sans se préoccuper de la phase de vol. Par exemple, le choix des modules (2) serait uniquement dicté par l'usure, les performances, ou un laps de temps réel d'utilisation (temporisation), afin d'uniformiser l'usure des différents modules (2) de séparation d'air.

L'invention consiste également dans un procédé d'inertage d'un réservoir de carburant d'un aéronef au moyen d'un générateur (1) de gaz d'inertage tel que décrit ciavant. Le procédé est remarquable en ce qu'il consiste à alimenter sélectivement en air, un seul, une partie ou l'ensemble des modules (2) de séparation d'air en fonction de la phase de vol de l'aéronef, et selon les différents critères de sélection des modules (2) de séparation d'air.

## Revendications

1. Générateur (1) de gaz d'inertage à partir d'un flux d'air, dans un système d'inertage d'au moins un réservoir de carburant d'un aéronef, le générateur (1) comprenant un circuit avec une entrée d'air et des moyens (5) de distribution du flux d'air vers une pluralité de modules (2) de séparation d'air agencés en parallèle sur le circuit d'air pour appauvrir l'air en oxygène et générer, en sortie, un gaz d'inertage enrichi en azote, et comprenant également une unité de contrôle (6) des moyens (5) de distribution programmée pour alimenter sélectivement en air un seul, une partie, ou l'ensemble des modules (2) de séparation d'air en fonction de la phase de vol de l'aéronef, où lorsqu'un seul ou une partie des modules (2) de séparation d'air sont alimentés en air, l'unité de contrôle (6) est programmée pour alimenter en air, parmi la pluralité de modules (2) de séparation d'air, le ou les modules (2) de séparation d'air ayant le nombre d'heures de fonctionnement cumulées le moins élevé, et/ou le ou les modules (2) de séparation d'air ayant les meilleures performances, ledit générateur (1) de gaz d'inertage comprend au moins un analyseur d'oxygène (7), et des moyens (8) pour diriger le gaz d'inertage en sortie de chaque module (2) de séparation d'air vers l'analyseur d'oxygène (7) **caractérisé en ce que** l'analyseur d'oxygène est utilisé pour mesurer les performances de chaque module (2) de séparation d'air indépendamment les uns des autres.

2. Générateur (1) selon la revendication 1, ***caractérisé* en ce que** l'unité de contrôle (6) est programmée pour alimenter en air un seul module (2) de séparation d'air lorsque l'aéronef est en phase de montée ou de croisière.

3. Générateur (1) selon l'une des revendications précédentes, ***caractérisé* en ce que** l'unité de contrôle (6) est programmée pour alimenter en air l'ensemble des modules (2) de séparation d'air lorsque l'aéronef est en phase de descente.

4. Générateur (1) selon l'une des revendications précédentes, ***caractérisé* en ce que**, lorsqu'un seul ou une partie des modules (2) de séparation d'air sont alimentés en air, l'unité de contrôle (6) est programmée pour alterner à intervalle de temps déterminé, parmi la pluralité de modules (2) de séparation d'air, l'alimentation du ou des modules (2) de séparation d'air.

5. Générateur (1) selon l'une des revendications précédentes, ***caractérisé* en ce que** les moyens (5) de distribution du flux d'air se présentent sous la forme d'une vanne multicanaux (9).

6. Générateur (1) selon l'une des revendications 1 à 4, ***caractérisé* en ce que** les moyens (5) de distribution du flux d'air se présentent sous la forme d'autant de vannes que de modules (2) de séparation d'air, chacune des vannes étant disposée en amont d'un module (2) de séparation d'air.

7. Générateur (1) selon l'une des revendications précédentes, ***caractérisé* en ce qu'**il comprend un clapet (16) anti-retour en sortie de chacun des modules (2) de séparation d'air.

8. Procédé d'inertage d'un réservoir de carburant d'un aéronef au moyen d'un générateur (1) de gaz d'inertage à partir d'un flux d'air comprenant un circuit d'air avec une entrée d'air, une sortie de gaz d'inertage, et une pluralité de modules (2) de séparation d'air agencés en parallèle sur le circuit d'air pour appauvrir l'air en oxygène et générer du gaz d'inertage enrichi en azote, le procédé consistant à alimenter sélectivement en air un seul, plusieurs, ou l'ensemble des modules (2) de séparation d'air en fonction de la phase de vol de l'aéronef, lorsqu'un seul ou une partie des modules (2) de séparation d'air sont alimentés en air, une unité de contrôle (6) est programmée pour alimenter en air, parmi la pluralité de modules (2) de séparation d'air, le ou les modules (2) de séparation d'air ayant le nombre d'heures de fonctionnement cumulées le moins élevé, et/ou le ou les modules (2) de séparation d'air ayant les meilleures performances, et dans lequel on mesure les performances de chaque module (2) de séparation d'air indépendamment les uns des autres en dirigeant le gaz d'inertage en sortie de chaque module (2) de séparation d'air vers un analyseur d'oxygène.

## Patentansprüche

1. Generator (1) für Inertisierungsgas aus einem Luftstrom in einem Inertisierungssystem mindestens eines Kraftstofftanks eines Luftfahrzeugs, wobei der Generator (1) einen Kreislauf mit einem Lufteingang und Mitteln (5) zum Verteilen des Luftstroms in eine Vielzahl von Luftabscheidemodulen (2) umfasst, die parallel in dem Luftkreislauf angeordnet sind, um die Luft an Sauerstoff zu verarmen, und am Ausgang ein mit Stickstoff angereichertes Inertisierungsgas zu generieren, und auch eine Steuereinheit (6) der Mittel (5) zum Verteilen umfassend, die programmiert ist, um selektiv ein einziges, einen Teil, oder alle Luftabscheidemodule (2) in Abhängigkeit von der Flugphase des Luftfahrzeugs mit Luft zu versorgen, wobei, wenn ein einziges, oder ein Teil der Luftabscheidemodule (2) mit Luft versorgt werden, die Steuereinheit (6) programmiert ist, um aus der Vielzahl von Luftabscheidemodulen (2) das oder die Luftabscheidemodule (2) mit Luft zu versorgen, welche(s) die geringste Anzahl an kumulierten Betriebsstunden aufweist oder aufweisen, und/oder das oder die Luftabscheidemodule (2), das oder die die besten Leistungen aufweist oder aufweisen, wobei der Generator (1) für Inertisierungsgas mindestens einen Sauerstoffanalysator (7) und Mittel (8) umfasst, um das Inertisierungsgas am Ausgang eines jeden Luftabscheidemoduls (2) zum Sauerstoffanalysator (7) zu leiten, **dadurch gekennzeichnet, dass** der Sauerstoffanalysator verwendet wird, um die Leistungen eines jeden Luftabscheidemoduls (2) unabhängig voneinander zu messen.

2. Generator (1) nach Anspruch 1, **dadurch gekennzeichnet, dass** die Steuereinheit (6) programmiert ist, um ein einziges Luftabscheidemodul (2) mit Luft zu versorgen, wenn sich das Luftfahrzeug in der Steig- oder Flugmarschphase befindet.

3. Generator (1) nach einem der vorstehenden Ansprüche, **dadurch gekennzeichnet, dass** die Steuereinheit (6) programmiert ist, um alle Luftabscheidemodule (2) mit Luft zu versorgen, wenn sich das Luftfahrzeug in der Sinkphase befindet.

4. Generator (1) nach einem der vorstehenden Ansprüche, **dadurch gekennzeichnet, dass**, wenn ein einziges oder ein Teil der Luftabscheidemodule (2) mit Luft versorgt werden, die Steuereinheit (6) programmiert ist, um die Versorgung des oder der Luftabscheidemodule (2) aus der Vielzahl von Luftabscheidemodulen (2) in einem bestimmten Zeitintervall abzuwechseln.

5. Generator (1) nach einem der vorstehenden Ansprüche, **dadurch gekennzeichnet, dass** sich die Mittel (5) zum Verteilen des Luftstroms in Form eines Mehrkanalventils (9) darstellen.

6. Generator (1) nach einem der Ansprüche 1 bis 4, **dadurch gekennzeichnet, dass** sich die Mittel (5) zum Verteilen des Luftstroms in Form von ebenso vielen Ventilen wie Luftabscheidemodule (2) darstellen, wobei jedes der Ventile stromaufwärts eines Luftabscheidemoduls (2) angeordnet ist.

7. Generator (1) nach einem der vorstehenden Ansprüche, **dadurch gekennzeichnet, dass** er ein Rückschlagventil (16) am Ausgang eines jeden der Luftabscheidemodule (2) umfasst.

8. Verfahren zum Inertisieren eines Kraftstofftanks eines Luftfahrzeugs anhand eines Generators (1) für Inertisierungsgas aus einem Luftstrom, umfassend einen Luftkreislauf mit einem Lufteingang, einen Ausgang für Inertisierungsgas, und eine Vielzahl von Luftabscheidemodulen (2), die parallel in dem Luftkreislauf angeordnet sind, um die Luft an Sauerstoff zu verarmen, und ein mit Stickstoff angereichertes Inertisierungsgas zu generieren, wobei das Verfahren darin besteht, selektiv ein einziges, mehrere, oder alle Luftabscheidemodule (2) in Abhängigkeit von der Flugphase des Luftfahrzeugs mit Luft zu versorgen, wobei, wenn ein einziges, oder ein Teil der Luftabscheidemodule (2) mit Luft versorgt werden, eine Steuereinheit (6) programmiert ist, um aus der Vielzahl von Luftabscheidemodulen (2) das oder die Luftabscheidemodule (2) mit Luft zu versorgen, welches die geringste Anzahl an kumulierten Betriebsstunden aufweist, und/oder das oder die Luftabscheidemodule (2), die die besten Leistungen aufweisen, und wobei die Leistungen eines jeden Luftabscheidemoduls (2) unabhängig voneinander gemessen werden, indem das Inertisierungsgas am Ausgang eines jeden Luftabscheidemoduls (2) zu einem Sauerstoffanalysator geleitet wird.

## Claims

1. Generator (1) of inerting gas from a flow of air, in a system for inerting at least one fuel tank of an aircraft, the generator (1) comprising a circuit with an air inlet and means (5) for distributing the flow of air towards a plurality of air separation modules (2) arranged in parallel on the air circuit to deplete the air of oxygen and generate, at the outlet, an inerting gas enriched in nitrogen, and also comprising a unit (6) for controlling the distribution means (5) programmed to selectively supply with air just one, a part, or all of the air separation modules (2) according to the flight phase of the aircraft,
wherein when just one or a part of the air separation modules (2) are supplied with air, the control unit (6) is programmed to supply with air, out of the plurality of air separation modules (2), the air separation module(s) (2) having the lowest number of cumulative operating hours, and/or the air separation module(s) (2) having the best performance, said generator (1) of inerting gas comprises at least one oxygen analyser (7), and means (8) for directing the inerting gas at the outlet of each air separation module (2) towards the oxygen analyser (7) **characterised in that** the oxygen analyser is used to measure the performance of each air separation module (2) independently of each other.

2. Generator (1) according to claim 1, **characterised in that** the control unit (6) is programmed to supply with air just one air separation module (2) when the aircraft is in the climbing or cruising phase.

3. Generator (1) according to one of the preceding claims, **characterised in that** the control unit (6) is programmed to supply with air all of the air separation modules (2) when the aircraft is in the descent phase.

4. Generator (1) according to one of the preceding claims, **characterised in that** when just one or a part of the air separation modules (2) are supplied with air, the control unit (6) is programmed to alternate at a determined time interval, among the plurality of air separation modules (2), the supply of the air separation module(s) (2).

5. Generator (1) according to one of the preceding claims, **characterised in that** the means (5) for distributing the flow of air are in the form of a multichannel valve (9).

6. Generator (1) according to one of claims 1 to 4, **characterised in that** the means (5) for distributing the flow of air are in the form of as many valves as air separation modules (2), each of the valves being disposed upstream of an air separation module (2).

7. Generator (1) according to one of the preceding claims, **characterised in that** it comprises a check valve (16) at the outlet of each of the air separation modules (2).

8. Method for inerting at least one fuel tank of an aircraft via a generator (1) of inerting gas from a flow of air comprising an air circuit with an air inlet, an outlet of inerting gas, and a plurality of air separation modules (2) arranged in parallel on the air circuit to deplete the air of oxygen and generate inerting gas enriched in nitrogen, the method involving selectively supplying with air just one, several, or all of the air separation modules (2) according to the flight phase of the aircraft, when just one or a part of the air separation modules (2) are supplied with air, a control unit (6) is programmed to supply with air, out of the plurality of air separation modules (2), the air separation module(s) (2) having the lowest number of cumulative operating hours, and/or the air separation module(s) (2) having the best performance, and wherein the performance of each air separation module (2) is measured independently of each other by directing the inerting gas at the outlet of each air separation module (2) towards an oxygen analyser.
